# EUROPÄISCHE PATENTSCHRIFT

(11) **EP 2 672 688 B1**
(45) Veröffentlichungstag und Bekanntmachung des Hinweises auf die Patenterteilung: **03.10.2018**
(21) Anmeldenummer: 13002857.4
(22) Anmeldetag: 03.06.2013
(51) Int. Cl.: H04M 3/523

(54) **Verfahren zum Betrieb eines Systems und System zum Verwalten von Anrufen bei einem Call-Center**
Method for operating a system and system for the management of calls in a call centre
Procédé de fonctionnement d'un système et système d'administration d'appels pour un centre d'appels

(30) Priorität: 06.06.2012 DE 102012011245
(43) Veröffentlichungstag der Anmeldung: 11.12.2013
(73) Patentinhaber: Vodafone Holding GmbH, 40549 Düsseldorf (DE)
(72) Erfinder: Nittka, Niko, DE - 60438 Frankfurt (DE)
(74) Vertreter: Ring & Weisbrodt

(56) Entgegenhaltungen:
- EP-A2- 0 426 361
- WO-A1-01/54388
- WO-A2-2010/087966
- US-A1- 2010 189 250

## Beschreibung

Die vorliegende Erfindung betrifft ein Verfahren zum Betrieb eines Systems und ein System zum Verwalten von Anrufen bei einem Call-Center, wobei durch das System ein von einem Anrufer unter Nutzung einer dem Call-Center zugeordneten Rufnummer initiierter erster Anruf automatisch angenommen wird, der erste Anruf bis zur Weiterleitung an einen Call-Center-Agenten in einer Warteschlange von auf eine Weiterleitung an einen Call-Center-Agenten wartenden weiteren Anrufen gehalten wird, in Bezug auf den ersten Anruf eine Warteposition in der Warteschlange ermittelt wird, der erste Anruf entsprechend der ermittelten Warteposition in die Warteschlange eingeordnet wird und die in der Warteschlange gehaltenen Anrufe bei Verfügbarkeit eines Call-Center-Agenten der Reihe nach an einen Call-Center-Agenten weitergeleitet werden, wobei bezüglich der in der Warteschlage weiter gehaltenen Anrufe jeweils eine Anpassung der Warteposition erfolgt.

Call-Center dienen im Allgemeinen der Wahrnehmung unterschiedlicher Telekommunikationsaufgaben und werden von Unternehmen insbesondere eingesetzt, um ihren Kunden Dienstleistungen, wie Beratung, Produkthilfe oder Verkauf anzubieten. Die vorliegende Erfindung betrifft insbesondere das Verwalten von Anrufen bei sogenannten Inbound-Call-Centern, welche Anrufe von Kunden entgegennehmen im Unterschied zu sogenannten Outbound-Call-Centern, bei denen Personen von Call-Center-Agenten angerufen werden, beispielsweise um diese als potenzielle Kunden zu gewinnen oder für Marktforschungszwecke.

Call-Center sind üblicherweise unter einer bestimmten Service-Rufnummer erreichbar, unter der Anrufer an entsprechende Mitarbeiter des Call-Centers, sogenannte Call-Center-Agenten, weitergeleitet werden. Für das Verwalten der eingehenden Anrufe, worunter insbesondere das Verteilen eingehender Anrufe auf freie Call-Center-Agenten, das Weiterleiten an entsprechende Call-Center-Agenten sowie das Kontrollieren bzw. Steuern eingehender Anrufe bis zur Weiterleitung an einen freien Call-Center-Agenten zu verstehen ist, sind im Stand der Technik unterschiedliche Systeme beziehungsweise Telefonanlagen bekannt. Wesentlicher Bestandteile solcher Systeme bzw. Anlagen ist eine sogenannte automatische Anrufverteilung (ACD; ACD: Automatic Call Distribution). Diese automatische Anrufverteilung hält eingehende Anrufe bis zur Weiterleitung an einen Call-Center-Agenten in einer Warteschlange von auf eine Weiterleitung an einen Call-Center-Agenten wartenden weiteren Anrufen. Eine Verteilung bzw. Weiterleitung der Anrufe erfolgt dabei üblicherweise nach dem sogenannten FIFO-Prinzip (FIFO: First in - First out), d. h., dass eingehende Anrufe in der Reihenfolge ihres Eingangs an einen freien Call-Center-Agenten weitergeleitet werden, wobei der zuerst eingegangene Anruf als erster weitergeleitet wird. Darüber hinaus wird oftmals das sogenannte "longest-idle"-Prinzip angewendet, wonach ein weiterzuleitender Anruf aus der Warteschlange an den Call-Center-Agenten weitergeleitet wird, dessen letztes Gespräch zeitlich am weitesten zurückliegt.

Die im Stand der Technik bekannten Systeme und Verfahren zum Betrieb von Systemen zum Verwalten von Anrufen bei einem Call-Center weisen jedoch Nachteile auf.

An ein Call-Center gerichtete Anrufe sind insbesondere zur Vermeidung von Missbrauch der zur Erreichung des Call-Centers bereitgestellten Service-Rufnummern durch unseriöse Anrufe, die die Call-Center-Agenten unnötig binden und somit für die Kunden längere Wartezeiten verursachen, üblicherweise nicht kostenfrei. Da ein eingehender Anruf in der Regel nicht unmittelbar an einen Call-Center-Agenten durchgestellt werden kann, und daher, wie bereits erläutert, zunächst in eine Warteschlange eingereiht werden muss, besteht ein Problem darin, dass dem Anrufer auch die Wartezeit, die er in der Warteschlange verbringt, in Rechnung gestellt wird. Durch die entstehenden Kosten werden entsprechende Wartezeiten durch die Anrufer besonders negativ bewertet bzw. wahrgenommen. Zur Reduzierung der Kosten ist in einigen Ländern (z. B. in Deutschland ab dem 1. September 2012) gesetzlich geregelt, dass ein Anrufer nicht kostenpflichtig in einer Warteschleife gehalten werden darf. Aus technischen Gründen sind in den deutschen Netzen derzeit jedoch in den gängigen Service-Rufnummerngassen, sowie aus den Mobilfunknetzen keine kostenlosen Warteschleifen realisierbar, die 120 Sekunden überschreiten. Da eine Weiterleitung an einen Call-Center-Agenten bzw. eine Rufannahme durch einen Call-Center-Agenten innerhalb von 120 Sekunden i.d.R. nicht sichergestellt werden kann, da dies zu hohen Personalkosten führen würde, müssen bzw. müssten entsprechende Anrufe von dem System nach Ablauf der 120 Sekunden mit der Aufforderung beendet werden, zu einem späteren Zeitpunkt erneut anzurufen. Da in einem solchen Fall das Anliegen des Anrufers nicht unmittelbar bearbeitet werden kann, wird dies zu einer Kundenunzufriedenheit und einer negativen Bewertung durch den Anrufer führen.

Im Stand der Technik bekannte Systeme bzw. Telefonanlagen zum Verwalten von Anrufen bei einem Call-Center begegnen diesem Problem teilweise dadurch, dass ein Anrufer seine Rufnummer hinterlassen kann und der Anrufer zurückgerufen wird, wenn ein freier Mitarbeiter verfügbar ist. Insbesondere da die zeitlichen Abstände zwischen dem von einem Anrufer initiierten Anruf und dem Rückruf durch einen Call-Center-Agenten nicht selten mehrere Stunden betragen, bestehen insbesondere die Nachteile, dass bei einem Rückruf der Anrufer nicht mehr erreichbar ist bzw. sich eine andere Person als der Anrufer meldet oder der Anrufer sein Anliegen schon anderweitig gelöst hat. Da der Call-Center-Agent während solcher Anrufe für andere Anrufer nicht verfügbar ist, sind derartige Rückrufe mit nicht unerheblichen Kosten für das Call-Center bzw. das Call-Center betreibende Unternehmen verbunden. Darüber hinaus sind entsprechende durch die Call-Center-Agenten durchzuführende Rückrufe prozessual schwieriger umsetzbar.

Die WO 01/54388 A1 offenbart ein Verfahren, um Multimedia-Kundenkommunikationen an geografisch verteilte Agenten von mehreren Call-Center-Standorten über ein Telefonnetzwerk und ein globales Datenkommunikationsnetzwerk zu bedienen. Dabei stellt ein System dem Telefonnetzwerk und dem globalen Datenkommunikationsnetzwerk separate Schnittstellenports zur Verfügung, wodurch ein potentielles Nadelöhr, welches eine Kommunikationsleistung begrenzt, eliminiert wird. Ferner kommen universelle Warteschlangen zum Einsatz, um eine effektive Verwendung von Fähigkeits-basierten Übereinstimmungsmerkmalen zu ermöglichen.

Die WO 2010/087966 A2 offenbart ein Kommunikationsverfahren zum Empfangen eingehender Kommunikationen von mobilen Kommunikationsvorrichtungen und zum Einleiten eines Rückrufs, bei welchem ein Kommunikationssystem eingehende Kommunikationen von einer mobilen Kommunikationsvorrichtung, wie zum Beispiel Datenanforderungen, empfängt. Die Datenanforderungen können für eine Liste von Anbietern oder Firmen und für eine Liste von entsprechenden Warteschlangen in Bezug auf Kundendienstleistungen sein. Das Kommunikationssystem umfasst typischerweise Komponenten und Warteschlangen zum Initiieren einer Rückrufsequenz zu einer Kommunikationsempfangsvorrichtung und zum Platzieren einer Kennung, die der Kommunikationsempfangsvorrichtung zugeordnet ist, in einer vom Benutzer ausgewählten Warteschlange, bestimmt die Wartezeit in einer Warteschlange und stellt einen ausgehenden Anruf an das Kommunikationsempfangsgerät.

Vor diesem Hintergrund liegt der vorliegenden Erfindung die Aufgabe zugrunde, ein verbessertes Verfahren zum Betrieb eines Systems zum Verwalten von Anrufen bei einem Call-Center sowie ein verbessertes System zum Verwalten von Anrufen bei einem Call-Center bereitzustellen, durch welche insbesondere der Nutzungskomfort für Anrufer erhöht wird und die Effizienz für den Call-Center-Betreiber gesteigert wird.

Zur technischen Lösung dieser Aufgabe wird mit der vorliegenden Erfindung ein Verfahren zum Betrieb eines Systems zum Verwalten von Anrufen bei einem Call-Center vorgeschlagen, wobei durch das System ein von einem Anrufer unter Nutzung einer dem Call-Center zugeordneten Rufnummer initiierter erster Anruf automatisch angenommen wird, der erste Anruf bis zur Weiterleitung an einen Call-Center-Agenten in einer Warteschlange von auf eine Weiterleitung an einen Call-Center-Agenten wartenden weiteren Anrufe gehalten wird, in Bezug auf den ersten Anruf eine Warteposition in der Warteschlange ermittelt wird, der erste Anruf entsprechend der ermittelten Warteposition in die Warteschlange eingeordnet wird, und die in der Warteschlange gehaltenen Anrufe bei Verfügbarkeit eines Call-Center-Agenten der Reihe nach an einen Call-Center-Agenten weitergeleitet werden, wobei bezüglich der in der Warteschlange weitergehaltenen Anrufe jeweils eine Anpassung der Warteposition erfolgt, welches dadurch gekennzeichnet ist, dass durch das System mit dem ersten Anruf eine Rufnummer des Anrufenden erfasst wird, der erste Anruf bei nicht erfolgter Weiterleitung innerhalb eines vorbestimmten Zeitintervalls beendet wird, unter Nutzung der erfassten Rufnummer ein zweiter Anruf zu dem Anrufer **unmittelbar nach Beenden des von dem Anrufer initiierten ersten Anrufs** initiiert wird, und bei Entgegennahme des zweiten Anrufs der zweite Anruf in die Warteschlange eingeordnet wird, wobei die Warteposition innerhalb der Warteschlange unter Berücksichtigung des ersten Anrufs ermittelt wird. Vorteilhafterweise wird mit dem durch das System erfolgten Beenden des ersten Anrufs der zweite Anruf durch das System initiiert. Vorzugsweise löst dabei das Beenden des ersten Anrufs das zeitlich unmittelbare bzw. sofortige Initiieren des zweiten Anrufs durch das System aus. Der zweite Anruf kann also zeitlich unmittelbar nach dem Beenden des ersten Anrufs automatisch durch das System getätigt werden.

Der Erfindung liegt die Erkenntnis zugrunde, dass ein Verfahren zum Betrieb eines Systems zum Verwalten von Anrufer in einem Call-Center verbessert werden kann, indem ein von einem Anrufer an ein Call-Center gerichteter Anruf bei nicht erfolgter Weiterleitung innerhalb eines vorbestimmten Zeitintervalls, beispielsweise einem gesetzlich vorgegebenen Zeitintervall von 120 Sekunden, durch das System beendet wird und der Anrufer quasi nahtlos durch einen Rückruf von dem System in die Warteschlange zurückgeholt wird, wobei der Anrufer vorteilhafterweise die Warteposition in der Warteschlange behält, die dem durch den Anrufer initiierten Anruf zugeordnet war. Durch den von dem System initiierten Rückruf wird der Anrufer somit vorteilhafterweise genauso schnell an einen Call-Center-Agenten weitergeleitet, wie bei einem Halten des durch den Anrufer initiierten Anrufs in der Warteschlange. Dabei reduzieren sich vorteilhafterweise für den Anrufer die Kosten, da er diese nur bis zum Beenden der Verbindung durch das System tragen muss. Durch den unmittelbaren Rückruf durch das System nach Beenden des von dem Anrufer initiierten Anrufs, ist der Anrufer vorteilhafterweise in der Regel auch direkt wieder erreichbar, d. h. es wird das Problem vermieden, dass eine andere Person als der Anrufer den eigehenden Rückruf entgegennimmt.

Gemäß einer vorteilhaften Ausgestaltung des erfindungsgemäßen Verfahrens ist vorgesehen, dass der für den ersten Anruf für eine Kommunikationsverbindung zwischen dem Anrufer und dem Call-Center genutzte Kanal nach dem durch das System erfolgten Beenden des ersten Anrufs für den zweiten Anruf reserviert wird. Vorteilhafterweise wird der Kanal dann für eine Kommunikationsverbindung von dem Call-Center zu dem Anrufer genutzt. Vorteilhafterweise ist hierdurch quasi gewährleistet, dass entsprechende Ressourcen für einen Rückruf zu dem Anrufer verfügbar sind. Durch die Nutzung desselben Kanals für den Rückruf ist vorteilhafterweise zudem die systeminterne Verwaltung des Rückrufs vereinfacht.

Gemäß einer besonders bevorzugten Ausgestaltung der Erfindung ist vorgesehen, dass der Zeitpunkt des Eingangs des ersten Anrufs erfasst wird. Vorteilhafterweise wird die Warteposition in der Warteschlange unter Berücksichtigung des erfassten Zeitpunktes ermittelt. Die Erfassung des Zeitpunktes des Eingangs des ersten Anrufs durch das System erfolgt in einer vorteilhaften Ausgestaltung der Erfindung absolut, vorteilhafterweise durch Erfassung des Datums und der Uhrzeit des Eingangs des Anrufs, und/oder relativ, vorteilhafterweise in Relation zu zuvor eingegangenen Anrufen und nachfolgenden Anrufen.

Gemäß einer besonders vorteilhaften Ausgestaltung der Erfindung wird der Zeitpunkt des Eingangs des ersten Anrufs der erfassten Rufnummer des Anrufers zugeordnet, die Warteposition des zweiten Anrufs in der Warteschlange durch den der Rufnummer zugeordneten Zeitpunkt bestimmt und der zweite Anruf entsprechend der bestimmten Warteposition in die Warteschlange eingeordnet. Das System kann dabei unter Nutzung der erfassten und vorteilhafterweise in einer Datenbank gespeicherten Rufnummer dem zweiten Anruf den vorteilhafterweise ebenfalls in einer Datenbank gespeicherten Zeitpunkt des Eingangs des ersten Anrufs zuordnen, so dass sich die Warteposition innerhalb der Warteschlange für den zweiten Anruf unter Berücksichtigung des ersten Anrufs ermitteln lässt und der zweite Anruf somit an der Stelle in die Warteschlange eingeordnet wird, an der auch der erste Anruf in der Warteschlange eingeordnet wäre. Vorteilhafterweise ist bei dieser Art der Berücksichtigung des ersten Anrufs für die Ermittlung der Warteposition innerhalb der Warteschlange nicht erforderlich, dass eine tatsächliche Warteposition erfasst und gespeichert werden muss, da anhand der jeweiligen Zeitpunkte der unterschiedlichen Anrufe jeweils eindeutig bestimmbar ist, in welcher Reihenfolge entsprechende Anrufe an die jeweiligen Call-Center-Agenten weiterzuleiten sind.

Gemäß einer weiteren vorteilhaften Ausgestaltungsvariante der vorliegenden Erfindung wird die in Bezug auf den ersten Anruf ermittelte Warteposition der erfassten Rufnummer zugeordnet und der zweite Anruf entsprechend der der erfassten Rufnummer zugeordneten Warteposition in die Warteschlange eingeordnet. Vorteilhafterweise wird hierbei die Warteposition nur einmal ermittelt und wird im Nachfolgenden lediglich entsprechend angepasst, wenn eine Weiterleitung von in der Warteschlange gehaltenen Anrufen erfolgt. Die Warteposition in der Warteschlange wird also aufgrund des ersten Anrufs auch für den zweiten Anruf beibehalten. Die Zuweisung des zweiten Anrufs an einen freien Call-Center-Agenten erfolgt in einigen Ausführungsbeispielen der vorliegenden Erfindung also aufgrund der zugeteilten bzw. ermittelten Warteposition des ersten Anrufs.

Gemäß einem weiteren vorteilhaften Aspekt der vorliegenden Erfindung wird die Warteposition unter Berücksichtigung weiterer Kriterien bestimmt. Vorteilhafte weitere Kriterien sind insbesondere die Häufigkeit von durch den Anrufer initiierten Anrufen, ein einer Rufnummer eines Anrufer zugeordneter vorgebbarer Status und/oder eine aus mehreren Anrufen eines Anrufers resultierende Gesamtwartezeit in der Warteschlange des Systems. Vorzugsweise lassen sich unter Berücksichtigung dieser Kriterien Anrufe in der Warteschlange weiter vorne positionieren als bei einer alleinigen Berücksichtigung des Zeitpunkts des Eingangs des ersten Anrufs. So ist für Premium-Kunden beispielsweise ein Status zuordbar, durch welchen sich die unter Berücksichtigung des Zeitpunkts des Eingangs des ersten Anrufs ermittelte Warteposition automatisch um eine vorbestimmte Anzahl von Wartepositionen in der Warteschlange weiter nach vorne verschiebt und somit eine frühere bzw. schnellere Weiterleitung an einen Call-Center-Agenten ermöglicht. Vorteilhafterweise sind entsprechende Kriterien durch das System mit einer bestimmten Rufnummer verknüpft und unter Nutzung dieser Verknüpfung für die Bestimmung einer Warteposition in einer Warteschlange auf einen Anruf anwendbar.

Eine weitere vorteilhafte Ausgestaltung des erfindungsgemäßen Verfahrens sieht vor, dass eine einer erfassten Rufnummer zugeordnete Warteposition jeweils bei Weiterleitung von in der Warteschlange gehaltenen Anrufen entsprechend angepasst wird. Vorteilhafterweise wird dabei eine einer Rufnummer zugeordnete Warteposition von dem System wie ein in der Warteschlange befindlicher Anruf behandelt. Vorzugsweise wird die Warteposition durch einen der Rufnummer zugeordneten Platzhalter für den zweiten Anruf reserviert. Dies ist insbesondere dann vorteilhaft, wenn der durch das System initiierte Rückruf nicht unmittelbar an den Anrufer durchstellbar ist, weil hierdurch die Warteposition, die der Anrufer in Bezug auf den ersten Anruf erworben hat, in der Warteschlange nach vorne wandert und die Warteposition somit für den Anrufer erhalten bleibt, sobald der durch das System initiierte Rückruf durch den Anrufer entgegen genommen wird. Vorteilhafterweise bleibt eine einer erfassten Rufnummer zugeordnete Warteposition, welche in der Warteschlange an erste Stelle gerückt ist und somit zu einer Weiterleitung an den nächsten verfügbaren Call-Center-Agenten berechtigt, der erfassten Rufnummer zugeordnet, wenn der erste Anruf beendet wurde und ein zweiter Anruf noch nicht entgegengenommen wurde, vorzugsweise unter Nutzung eines der Rufnummer zugeordneten Platzhalters. Vorteilhafterweise leitet das System in einem solchen Fall den Anruf an einen verfügbaren Call-Center-Agenten weiter, der in der Warteschlange als nächstes folgt. Das System prüft dazu vorteilhafterweise, ob einer zu einer Weiterleitung an den nächsten verfügbaren Call-Center-Agenten berechtigenden Warteposition ein erster oder ein zweiter Anruf zugeordnet ist oder ob die Warteposition durch einen Platzhalter für einen noch zu initiierenden zweiten Anruf reserviert ist. Gemäß einer weiteren vorteilhaften Ausgestaltung der Erfindung bleibt eine Warteposition, die eine sofortige Weiterleitung bedingt, einer Rufnummer so lange zugeordnet, bis eine Weiterleitung des Anrufers an einen Call-Center-Agenten erfolgt ist, oder ein vordefiniertes weiteres Zeitintervall abgelaufen ist. Durch Berücksichtigung eines weiteren vordefinierten Zeitintervalls kann das System vorteilhafterweise solche einer Rufnummer zugeordnete Wartepositionen bzw. durch einen Platzhalter reservierte Wartepositionen freigeben bzw. löschen, zu deren zugeordneter Rufnummer das System keine Kommunikationsverbindung aufbauen kann, beispielsweise weil eine Rufnummer fälschlich von dem System erfasst und/oder fälschlich durch einen Anrufer eingegeben wurde.

Eine weitere vorteilhafte Ausgestaltung der Erfindung sieht vor, dass mit der Initiierung des ersten Anrufs die dem Endgerät des Anrufenden zugeordnete Rufnummer über eine von dem Endgerät zu dem Call-Center aufgebaute Kommunikationsverbindung an das System übermittelt wird. Vorteilhafterweise wird dabei die übermittelte Rufnummer als Rufnummer des Anrufenden durch das System erfasst. Vorteilhafterweise unterstützen dazu sowohl das Endgerät des Anrufers als auch das System zur Verwaltung der eingehenden Anrufe die sogenannte CLIP-Funktion (CLIP: Calling Line Identification Presentation). Bei entsprechender Rufnummernübermittlung sind im Rahmen der Erfassung der Rufnummer durch das System vorteilhafterweise keine weiteren Eingaben durch den Anrufer erforderlich. Falscheingaben können vorteilhafterweise somit vermieden werden.

Hat ein Anrufer die CLIR-Funktion (CLIR: Calling Line Identification Restriction) aktiviert, so dass die Übermittlung der Rufnummer zum gerufenen Teilnehmer, also dem Call-Center, unterdrückt wird, ist gemäß einer vorteilhaften Weiterbildung des Verfahrens vorgesehen, dass der Anrufer um Erlaubnis gefragt wird, dessen Rufnummer für einen Rückruf ermitteln zu dürfen. Hierbei wird ausgenutzt, dass die Rufnummer des Anrufenden auch bei unterdrückter Rufnummer dem Netzbetreiber vorliegt und somit ermittelbar ist.

Gemäß einem weiteren vorteilhaften Aspekt der vorliegenden Erfindung wird der durch das System angenommene Erstanruf mit einem Sprachdialogsystem (IVR-System; IVR: Interactice Voice Response) verbunden. Das Sprachdialogsystem ermöglicht es vorteilhafterweise, dass Anrufer zumindest teilweise automatisierte Dialoge mit dem System führen können, in denen bereits Gründe für den Anruf ermittelt werden können. Diese Gründe können vorteilhafterweise zu einem späteren Zeitpunkt dem Call-Center-Agenten angezeigt werden, so dass der Call-Center-Agent sich bereits im Voraus ein besseres Bild von den Wünschen des Anrufers machen kann, wenn der Anrufer an diesen weitergeleitet wird. Darüber hinaus sind Anrufe in Abhängigkeit von ermittelten Gründen für einen Anruf filterbar und können an für die jeweiligen Gründe zuständige Call-Center-Agenten weitergeleitet werden.

Des Weiteren ist gemäß einer vorteilhaften Ausgestaltung der Erfindung vorgesehen, dass zur Erfassung einer Rufnummer des Anrufenden der Anrufer in einem Dialog mit dem Sprachdialogsystem zur Eingabe einer Rufnummer aufgefordert wird. Die Eingabe der Rufnummer durch den Anrufer erfolgt dabei vorteilhafterweise durch Eingabe über die Tastatur des Endgerätes des Anrufenden und/oder durch Spracheingabe. Die in dem Dialog mit dem Sprachdialogsystem von dem Anrufer eingegebene Rufnummer wird vorteilhafterweise durch das System als Rufnummer des Anrufenden erfasst. Vorteilhafterweise kann die von dem Anrufer eingegebene Rufnummer von der dem für den ersten Anruf genutzen Endgerät zugeordneten Rufnummer abweichen. Hat ein Anrufer beispielsweise von einem Festnetztelefon angerufen, so kann der durch das System initiierte Rückruf dann auf ein Mobilfunktelefon erfolgen.

Ferner wird vorgeschlagen, dass bei nicht erfolgter Entgegennahme des zweiten Anrufs wenigstens ein weiterer zweiter Anruf durch das System initiiert wird. Vorteilhafterweise ist vorgebbar, wie oft das System einen Rückrufversuch wiederholen soll und/oder vorgebbar in welchem Zeitintervall Rückrufversuche zu einer Rufnummer durch das System initiiert werden. Beispielsweise ist vorgebbar, dass von dem System bei nicht erfolgter Rufannahme durch den Angerufenen bis zu zehn Rückrufversuche innerhalb eines einstellbaren Zeitintervalls initiiert werden bzw. bei einem Besetzt des Angerufenen periodisch innerhalb von wenigen Sekunden ein Rückruf initiiert wird.

Eine weitere vorteilhafte Ausgestaltung der Erfindung ist dadurch gekennzeichnet, dass für unterschiedliche Belange von Anrufern jeweils eine Gruppe von Call-Center-Agenten zuständig ist und jeder Gruppe eine Warteschlange zum Halten von an zu der jeweiligen Gruppe gehörenden Call-Center-Agenten weiterzuleitenden Anrufen zugewiesen ist, wobei in Bezug auf den ersten Anruf eine Warteposition in jeder der Warteschlangen unter Berücksichtigung des ersten Anrufes, vorzugsweise unter Berücksichtigung des erfassten Zeitpunktes des Eingangs des ersten Anrufes, ermittelt wird. Wird ein Anrufer an einen Call-Center-Agenten weitergeleitet, ist vorteilhafterweise vorgesehen, dass eine Warteposition für den Anrufer in den anderen Warteschlangen gehalten wird, um den Anrufer in eine der anderen Warteschlangen an der jeweiligen Warteposition einordnen zu können, wenn der Call-Center-Agent den Anrufer an einen anderen Call-Center-Agenten bzw. an eine andere Gruppe von Call-Center-Agenten weiterleiten möchte. Gemäß einer vorteilhaften Ausgestaltungsvariante wird bei einer Weiterleitung eines Anrufs von einem Call-Center-Agenten an einen weiteren Call-Center-Agenten bzw. an eine weitere Gruppe von Call-Center-Agenten die Warteposition in der jeweiligen, dem weiteren Call-Center-Agenten bzw. der Gruppe von Call-Center-Agenten zugeordneten Warteschlange unter Berücksichtigung des der Rufnummer des weiterzuleitenden Anrufs zugeordneten Zeitpunkts des Eingangs des ersten Anrufs und unter Berücksichtigung der den in der Warteschlange befindlichen weiteren Anrufen über deren Rufnummer zugeordneten Zeitpunkte bestimmt und der weiterzuleitende Anruf entsprechend der bestimmten Warteposition in die Warteschlange eingeordnet. Vorteilhafterweise wird der Anrufer bei einer derartigen Weiterleitung somit nicht an das Ende einer existierenden Warteschlange eingeordnet, so dass sich entsprechende weitere Wartezeiten für den Anrufer verkürzen und sich der Nutzungskomfort für den Anrufer somit erhöht.

Zur Lösung der eingangs genannten Aufgabe wird mit der vorliegenden Erfindung zudem ein System zum Verwalten von Anrufen bei einem Call-Center vorgeschlagen, welches durch Mittel zum Ausführen eines erfindungsgemäßen Verfahrens gekennzeichnet ist. Vorteilhafterweise weist das System Mittel zum Annehmen von Anrufen; zum Erfassen einer Rufnummer; zum Erfassen des Zeitpunkts des Eingangs eines Anrufs; zum Zuordnen eines erfassten Zeitpunktes eines eingehenden ersten Anrufs zu einer erfassten Rufnummer; zum Ermitteln einer Warteposition in der Warteschlange; zum Einordnen eines Anrufs entsprechend der ermittelten Position in die Warteschlange; zum Halten von Anrufen in einer Warteschlange; zum Anpassen einer Warteposition in der Warteschlange; zum Erfassen der Wartezeit eines ersten Anrufs in der Warteschlange; zum Beenden eines Anrufs; zum Initiieren eines Anrufs; zum Halten einer Warteposition in einer Warteschlange; zum Zuordnen einer Warteposition zu einer Rufnummer; und/oder Mittel zum Weiterleiten eines Anrufs auf. Vorteilhafterweise weist das System ferner eine Sprachdialogsystem und/oder eine Datenbank auf. Vorteilhafterweise sind die Mittel des Systems in Kombination vorzugsweise zur Erweiterung, mit aus dem Stand der Technik bekannten Anrufverteilfunktionen (ACD) nutzbar.

Weitere vorteilhafte Einzelheiten, Merkmale und Ausgestaltungen der Erfindung werden nachfolgend anhand der in den Figuren der Zeichnung dargestellten Ausführungsbeispiele der Erfindung näher erläutert. Dabei zeigt:
- Fig. 1: in einer Prinzipdarstellung ein Ausführungsbeispiel für ein erfindungsgemäßes System bei der Ausführung eines erfindungsgemäßen Verfahrens;
- Fig. 2a-2e: in einer Prinzipdarstellung ein Ausführungsbeispiel für eine erfindungsgemäße Einordnung eines Anrufs in eine Warteschlange;
- Fig. 3: in einer Prinzipdarstellung ein weiteres Ausführungsbeispiel für ein erfindungsgemäßes System bei der Ausführung eines erfindungsgemäßen Verfahrens;
- Fig. 4a-4e: in einer Prinzipdarstellung ein weiteres Ausführungsbeispiel für eine erfindungsgemäße Einordnung von Anrufen in eine Warteschlange; und
- Fig. 5: in einer Prinzipdarstellung ein Ausführungsbeispiel für einen Teil eines erfindungsgemäßen Systems bei der Ausführung eines Teils des erfindungsgemäßen Verfahrens.

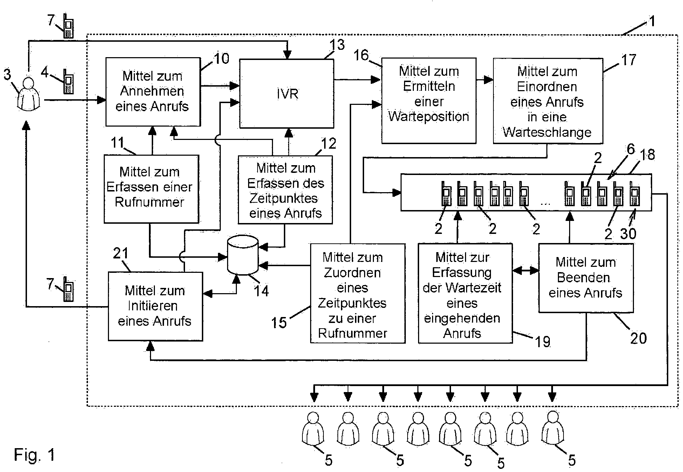

In Fig. 1 ist in einer Prinzipdarstellung ein Ausführungsbeispiel für ein erfindungsgemäßes System 1 zum Verwalten von Anrufen bei einem Call-Center dargestellt. Besonders hervorzuhebende Komponenten des Systems sind vereinfacht durch entsprechende Blöcke dargestellt. Von der Darstellung von für die vorliegende Erfindung weniger wesentliche Komponenten eines entsprechenden Systems zum Verwalten von Anrufen bei einem Call-Center wurde aus Übersichtlichkeitsgründen abgesehen.

Das System 1 ist vorteilhafterweise ausgebildet, einen von einem Anrufer 3 unter Nutzung einer dem Call-Center zugeordneten Rufnummer initiierten ersten Anruf 4 automatisch anzunehmen, den ersten Anruf 4 bis zur Weiterleitung an einen Call-Center-Agenten 5 in einer Warteschlange 6 von auf eine Weiterleitung an einen Call-Center-Agenten 5 wartenden weiteren Anrufen 2 zu halten, in Bezug auf den ersten Anruf 4 eine Warteposition in der Warteschlange 6 zu ermitteln, den ersten Anruf 4 entsprechend der ermittelten Warteposition in die Warteschlange 6 einzuordnen, die in der Warteschlange 6 gehaltenen Anrufe 2 bei Verfügbarkeit eines Call-Center-Agenten 5 der Reihe nach an einen Call-Center-Agenten 5 weiterzuleiten, wobei bezüglich der in der Warteschlange 6 weiter gehaltenen Anrufe 2 jeweils eine Anpassung der Warteposition erfolgt, mit dem ersten Anruf 4 eine Rufnummer des Anrufenden 3 zu erfassen, den ersten Anruf 4 bei nicht erfolgter Weiterleitung innerhalb eines vorbestimmten Zeitintervalls zu beenden, unter Nutzung der erfassten Rufnummer einen zweiten Anruf 7 zu dem Anrufer 3 zu initiieren und bei Entgegennahme des zweiten Anrufs 7, den zweiten Anruf 7 in die Warteschlange 6 einzuordnen, wobei das System die Warteposition innerhalb der Warteschlange 6 unter Berücksichtigung des ersten Anrufs 4, vorzugsweise unter Berücksichtigung des Zeitpunkts des Eingangs des ersten Anrufs 4, ermittelt. Das System 1 weist hierzu unterschiedliche Mittel auf. Erfindungsgemäß ist vorgesehen, dass diese Mittel als Hardware und/oder als Software realisiert werden.

Insbesondere weist das System 1 Mittel 10 zum Annehmen eines Anrufs, Mittel 11 zum Erfassen einer Rufnummer, Mittel 12 zum Erfassen des Zeitpunkts eines Anrufs, ein Sprachdialogsystem (IVR) 13, eine Datenbank 14, insbesondere zum Speichern von erfassten Rufnummern und zum Speichern der erfassten Zeitpunkte des Eingangs eines Anrufs, Mittel 15 zum Zuordnen eines Zeitpunktes zu einer Rufnummer, Mittel 16 zum Ermitteln einer Warteposition, Mittel 17 zum Einordnen eines Anrufs in einer Warteschlange, Mittel 18 zum Halten von Anrufen in einer Warteschlange, Mittel 19 zur Erfassung der Wartezeit eines eingehenden Anrufs, Mittel 20 zum Beenden eines Anrufs und Mittel 21 zum Initiieren eines Anrufs auf.

Die in Fig. 1 dargestellten, die Mittel verbindenden Pfeile dienen dem besseren Verständnis dafür, wie das dargestellte System eingehende Anrufe verwaltet und wie die unterschiedlichen Mittel des Systems aufeinander zugreifen. Aus den Pfeilen ist jedoch nicht ableitbar, dass ein entsprechender Signalfluss nur in die jeweilige Pfeilrichtung erfolgen würde bzw. Mittel, die nicht durch Pfeile verbunden sind, nicht direkt aufeinander zugreifen könnten. Vielmehr ist vorteilhafterweise vorgesehen, dass die Mittel jeweils direkt miteinander bzw. untereinander Informationen austauschen können.

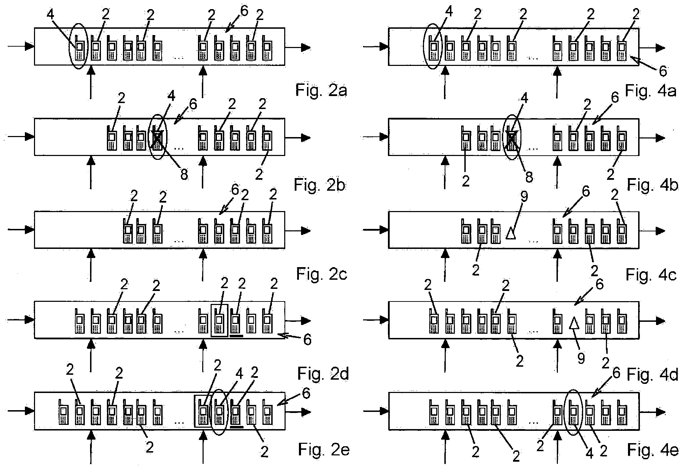

Das in Fig. 1 dargestellte Ausführungsbeispiel für ein erfindungsgemäßes System 1 bzw. die durch das System 1 bereitgestellten Mittel sind ausgebildet, ein von einem Anrufer 3 unter Nutzung einer dem Call-Center zugeordneten Rufnummer initiierten ersten Anruf 4 (Anrufe sind symbolisch durch ein Telefonsymbol dargestellt) automatisch anzunehmen. Eine mit dem Anruf 4 übermittelte Rufnummer wird durch die Mittel 11 zum Erfassen einer Rufnummer erfasst und die Rufnummer in der Datenbank 14 abgespeichert. Darüber hinaus wird durch das Mittel 12 zum Erfassen des Zeitpunkts eines Anrufs der Zeitpunkt des Eingangs des Anrufs 4 erfasst und ebenfalls in der Datenbank 14 abgespeichert. Unter Nutzung der Mittel 15 zum Zuordnen eines Zeitpunktes zu einer Rufnummer wird der Zeitpunkt des Eingangs des ersten Anrufs 4 der erfassten Rufnummer zugeordnet. Der Anruf 4 wird an das Sprachdialogsystem 13 weitergeleitet und in eine Warteschlange 6 eingeordnet. Zur Einordnung des Anrufs 4 in die Warteschlange 6 wird unter Nutzung der Mittel 16 zum Ermitteln einer Warteposition unter Berücksichtigung des Zeitpunkts des Eingangs des Anrufs 4 eine Warteposition für den Anruf 4 ermittelt und mit den Mitteln 17 zum Einordnen eines Anrufs in eine Warteschlange unter Berücksichtigung der ermittelten Warteposition der Anruf 4 in die Warteschlange 6 eingeordnet. Die erfindungsgemäße Einordnung in die Warteschlange 6 wird im Zusammenhang mit den Figuren 2a bis 2e näher erläutert. Von einer expliziten Darstellung in Figur 1 wurde aus Übersichtlichkeitsgründen abgesehen.

Während der Anruf 4 in der Warteschlange 6 durch die Mittel 18 zum Halten eines Anrufs in einer Warteschlange 6 gehalten wird, wird durch das Sprachdialogsystem 13 eine Warte-Ansage abgespielt, beispielsweise: "Sehr geehrter Kunde, leider ist zurzeit kein freier Call-Center-Agent 5 verfügbar. Ihr Anruf wird gehalten.". Während der erste Anruf 4 in der Warteschlage 6 gehalten wird, wird durch die Mittel 19 zur Erfassung der Wartezeit eines eingehenden Anrufs in Bezug auf den ersten Anruf 4 ermittelt, wie lange sich dieser Anruf 4 bereits in der Warteschlange 6 befindet. Gemäß dem dargestellten Ausführungsbeispiel ist vorgesehen, dass ein Anruf beispielsweise nicht länger als 120 Sekunden in der Warteschlange 6 gehalten wird. Ist ein Anrufer 3 nicht innerhalb eines vorbestimmten Zeitintervalls von beispielsweise 120 Sekunden an einen Call-Center-Agenten 5 weitergeleitet worden, so wird der Anruf 4 durch die Mittel 20 zum Beenden eines Anrufs beendet. Die Kommunikationsverbindung zwischen dem Anrufer 3 und dem Call-Center wird abgebrochen. Rechtzeitig vor Ablauf der 120 Sekunden Wartezeit erhält der Anrufer 3 durch das Sprachdialogsystem 13 eine Hinweisansage, beispielsweise: "Leider sind immer noch alle Mitarbeiter im Gespräch. Damit Ihnen keine Kosten entstehen, rufen wir Sie sofort zurück. Bitte legen Sie jetzt auf, der Rückruf erfolgt umgehend.". Nach dem durch das System 1 erfolgtem Beenden des ersten Anrufs 4 wird der für den ersten Anruf 4 für eine Kommunikationsverbindung zwischen dem Anrufer 3 und dem Call-Center genutzte Kanal für den zweiten Anruf 7 reserviert.

Mit dem Beenden des Anrufs 4 wird unmittelbar durch die Mittel 21 zum Initiieren eines Anrufs unter Nutzung der erfassten und in der Datenbank 14 gespeicherten Rufnummer des Anrufers 3 ein zweiter Anruf 7 zu dem Anrufer 3 initiiert. D.h. es wird selbst dann ein Rückruf bzw. ein zweiter Anruf 7 zu dem Anrufer 3 initiiert, wenn weiterhin noch kein Call-Center-Agent 5 frei ist. Für eine Kommunikationsverbindung von dem Call-Center zu dem Anrufer 3 wird der reservierte Kanal genutzt. Nimmt der Anrufer 3 den zweiten Anruf 7 entgegen, wird der Anrufer 3 direkt wieder mit dem Sprachdialogsystem 13 verbunden. Dem Anrufer 3 wird dabei durch das Sprachdialogsystem 13 signalisiert, dass er wieder mit dem Call-Center verbunden ist, beispielsweise durch folgende Hinweisansage: "Hier ist das Unternehmen XY. Bitte haben Sie noch etwas Geduld, der nächste freie Mitarbeiter ist für Sie reserviert. Die Anrufkosten übernehmen wir für Sie.". Darüber hinaus wird mit den Mitteln 16 zum Ermitteln einer Warteposition eines Anrufs eine Warteposition in der Warteschlange 6 für den zweiten Anruf 7 ermittelt. Dazu wird auf den der Rufnummer zugeordneten und in der Datenbank 14 abgespeicherten Zeitpunkt des Eingangs des ersten Anrufs 4 zurückgegriffen. Ist eine entsprechende Warteposition bestimmt, wird mit den Mittel 17 zum Einordnen eines Anrufs in eine Warteschlange 6 der zweite Anruf 7 in die Warteschlange 6 eingeordnet. Die Einordnung in die Warteschlange 6 wird im Zusammenhang mit Fig. 2a bis Fig. 2e näher erläutert und ist in Fig. 1 nicht explizit dargestellt. Ist der zweite Anruf 7 in der Warteschlange 6 auf die erste Position 30 vorgerückt, wird der Anruf an einen Call-Center-Agenten 5 weitergeleitet, sobald der nächste Call-Center-Agent 5 verfügbar ist.

Unter Bezugnahme auf Fig. 2a bis Fig. 2e wird eine erfindungsgemäße Einordnung eines ersten Anrufs 4 und eines zweiten Anrufs 7 in eine Warteschlange 6 erläutert. Der erste Anruf 4 bzw. der zweite Anruf 7 ist zur Hervorhebung jeweils durch eine Ellipse umrahmt. Der erfasste Zeitpunkt eines ersten Anrufs 4, beispielsweise 13:01:08 Uhr, wird zur Ermittlung einer Warteposition in der Warteschlange 6 genutzt. Da vorliegend bislang keine weiteren Anrufe nach dem Zeitpunkt des Eingangs des ersten Anrufs 4 eingegangen sind, wird der erste Anruf 4 in der Warteschlange 6 an letzter Stelle eingeordnet. Dies ist symbolisch in Figur 2a dargestellt. Nach Ablauf einer vorbestimmten Wartezeit von 120 Sekunden wird der Anruf 4, der mittlerweile in der Warteschlange 6 um fünf Positionen weiter vorgerückt ist, wie symbolisch in Fig. 2b dargestellt, beendet. Das Beenden des Anrufs 4 ist symbolisch durch das Kreuz 8 dargestellt. Durch das Beenden 8 des ersten Anrufs 4 befindet sich der Anruf 4 nicht mehr in der Warteschlange 6, wie symbolisch in Fig. 2c dargestellt. Bei Entgegennahme des durch das System initiierten zweiten Anrufs 7 wird anhand des erfassten Zeitpunkts des Eingangs des ersten Anrufs 4 und der entsprechenden Zuordnung zu der für die Initiierung des zweiten Anrufs 7 genutzten Rufnummer die Warteposition in der Warteschlange 6 ermittelt. Dazu vergleicht das System den erfassten Zeitpunkt des Eingangs des ersten Anrufs 4, welcher der Rufnummer zugeordnet ist, mit den Zeitpunkten des Eingangs der weiteren Anrufe 2 bzw. mit den den weiteren Anrufen 2 zugeordneten Zeitpunkten der jeweiligen ersten Anrufe. Dabei stellt das System fest, dass der erste Anruf 4 zu einem Zeitpunkt nach dem in Fig. 2d durch einen Unterstrich gekennzeichneten Anruf 2 (diesem Anruf 2 ist beispielsweise der Zeitpunkt 13:00:56 Uhr zugeordnet) und vor dem durch ein Rechteck gekennzeichneten weiteren Anruf 2 (diesem Anruf 2 ist beispielsweise der Zeitpunkt 13:01:29 zugeordnet) eingegangen ist. Wie in Fig. 2e dargestellt, wird der zweite Anruf 7 von dem System daher zwischen die entsprechend durch einen Unterstrich bzw. ein Rechteck hervorgehobenen weiteren Anrufe 2 eingeordnet, vorliegend also an vierter Stelle in der Warteschlange 6.

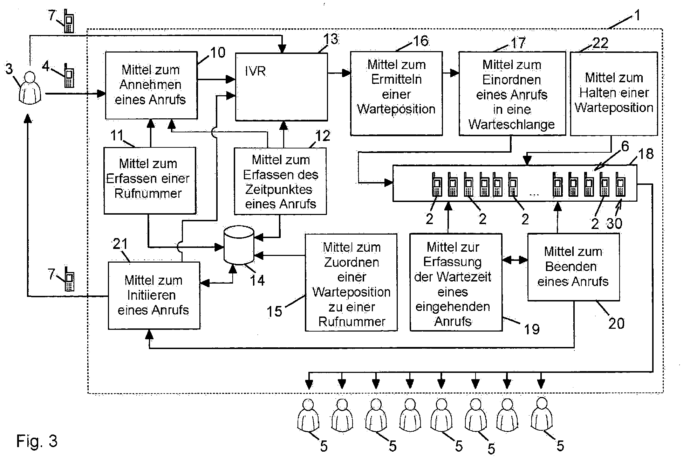

In Fig. 3 ist in einer Prinzipdarstellung ein weiteres Ausführungsbeispiel für ein erfindungsgemäßes System 1 dargestellt, welches ausgebildet ist, ein erfindungsgemäßes Verfahren auszuführen. Ergänzend zu dem in Fig. 1 dargestellten Ausführungsbeispiel weist das System 1 in Fig. 3 Mittel 22 zum Halten einer Warteposition auf. Wie in Bezug auf Fig. 1 erläutert, ermittelt auch das System 1 gemäß Fig. 3 die Warteposition eines ersten Anrufs 4 unter Berücksichtigung des Zeitpunktes des Eingangs des ersten Anrufs 4. Unter Nutzung der Mittel 22 zum Halten einer Warteposition wird bei dem System 11 gemäß Fig. 3 die in Bezug auf den ersten Anruf 4 ermittelte Warteposition der erfassten Rufnummer zugeordnet und der zweite Anruf 7 entsprechend der der erfassten Rufnummer zugeordneten Warteposition in die Warteschlange 6 eingeordnet. Die Einordnung des ersten Anrufs 4 bzw. des zweiten Anrufs 7 in die Warteschlange 6 wird unter Bezugnahme auf Fig. 4a bis Fig. 4e näher erläutert und ist in Fig. 3 nicht explizit dargestellt. Die Mittel 22 zum Halten einer Warteposition in der Warteschlange 6 sind darüber hinaus dazu ausgebildet, eine einer erfassten Rufnummer zugeordnete Warteposition jeweils bei Weiterleitung von in der Warteschlange gehaltenen Anrufen 2 entsprechend anzupassen. Ferner ist das Mittel 22 zum Halten einer Warteposition dazu ausgebildet, eine einer erfassten Rufnummer zugeordnete Warteposition, welche in der Warteschlange 6 an erste Stelle gerückt ist und somit zu einer Weiterleitung an den nächsten verfügbaren Call-Center-Agenten 5 berechtigt, für eine erfasste Rufnummer auch dann zu halten, wenn der erste Anruf 4 beendet wurde und ein zweiter Anruf 7 noch nicht entgegen genommen wurde. Die Warteposition wird dazu durch einen der Rufnummer zugeordneten Platzhalter (in Fig. 3 nicht explizit dargestellt) reserviert. Eine entsprechende Warteposition, die eine sofortige Weiterleitung bedingt, bleibt dabei einer Rufnummer so lange zugeordnet, bis ein Rückruf zu dem Anrufer 3 erfolgreich initiiert ist oder ein vordefiniertes Zeitintervall abgelaufen ist. Ist das vordefinierte Zeitintervall abgelaufen, wird die durch den Platzhalter reservierte Warteposition wieder freigegeben.

In Zusammenhang mit Fig. 4a bis Fig. 4e wird ein weiteres Ausführungsbeispiel für eine erfindungsgemäße Einordnung von Anrufen in eine Warteschlange 6 erläutert, wobei das in Fig. 3 dargestellte System 1 zur Durchführung der im Zusammenhang mit Fig. 4a bis Fig. 4e erläuterten Einordnung von Anrufen in eine Warteschlage 6 ausgebildet ist. Hierzu wird zunächst durch Mittel 16 zum Ermitteln einer Warteposition eines Anrufs eine Warteposition für einen eingehenden ersten Anruf 4 in der Warteschlange 6 ermittelt. Als zuletzt eingegangener Anruf, dem bislang noch keine weiteren Anrufe gefolgt sind, wird der erste Anruf 4, wie in Fig. 4a dargestellt, als letzter Anruf in die Warteschlange 6 eingereiht (der erste Anruf 4 sowie der zweite Anruf 7 sind in Fig. 4a bis Fig. 4e jeweils durch Umrahmung mit einer Ellipse hervorgehoben). Nach Ablauf eines vordefinierten Zeitintervalls, das vorliegend der Länge einer Mitteilung durch ein Sprachdialogsystem 13 entspricht, in welcher einem Anrufer 3 mitgeteilt wird, dass ein Anruf im Moment nicht an einen Call-Center-Agenten 5 weitergeleitet werden kann, weshalb zur Vermeidung von Kosten für den Anrufer 3 der Anruf 4 automatisch beendet wird und automatisch ein Rückruf zu dem Anrufer 3 initiiert wird, wird der erste Anruf 4 durch das System 1 bzw. durch die von dem System 1 bereitgestellten Mittel 20 zum Beenden eines Anrufs beendet (in Fig. 4b symbolisch durch das Kreuz 8 dargestellt). Nach dem Beenden 8 des ersten Anrufs 4 wird die Warteposition, die der erste Anruf 4 in der Warteschlange 6 inne hatte, für den von dem System 1 zu initiierenden zweiten Anruf 7 durch einen Platzhalter 9 reserviert. Hierzu stellt das System 1 Mittel 22 zum Halten einer Warteposition bereit. Die Mittel 22 zum Halten einer Warteposition ermöglichen darüber hinaus, dass die Warteposition des Platzhalters 9 entsprechend angepasst wird, wenn die weiteren in der Warteschlange 6 gehaltenen Anrufe 2 bei Verfügbarkeit eines Call-Center-Agenten 5 der Reihe nach an einen Call-Center-Agenten 5 weitergeleitet werden. In Fig. 4d ist hierzu symbolisch dargestellt, dass der Platzhalter 9 bis auf die vierte Stelle in der Warteschlange 6 vorgerückt ist. Hat das System 1 erfolgreich einen zweiten Anruf 7 zu dem Anrufer 3 initiiert, das heißt der Anrufer 3 hat den von dem Call-Center ausgehenden Anruf 7 entgegengenommen, wird unter Nutzung der Mittel 17 zum Einordnen eines Anrufs in eine Warteschlange 6 der zweite Anruf 7 nunmehr an Stelle des der Rufnummer des Anrufers 3 zugeordneten Platzhalters 9 in die Warteschlange 6 eingeordnet. Eine erneute Ermittlung der Warteposition für den zweiten Anruf 7 anhand des erfassten Zeitpunktes des Eingangs des ersten Anrufs 4 ist dabei entbehrlich.

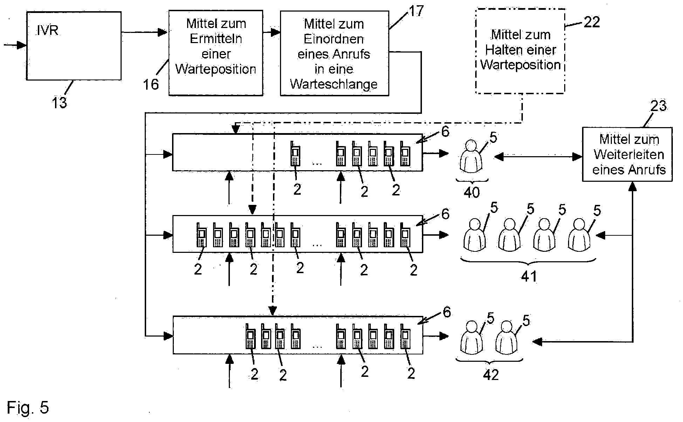

Unter Bezugnahme auf Fig. 5 wird ein ein Ausführungsbeispiel für einen Teil eines erfindungsgemäßen Systems 1 zum Verwalten von Anrufen bei einem Call-Center erläutert, welcher gemäß einer vorteilhaften Ausgestaltungsvariante anstelle der entsprechenden Teile der in Fig. 1 bzw. Fig. 3 dargestellten Systeme 1 vorgesehen ist. Hierbei ist für unterschiedliche Belange eines Anrufers 3 jeweils eine Gruppe 40, 41, 42 von Call-Center-Agenten 5 zuständig. Beispielsweise ist eine Gruppe 40 für Fragen zu Verträgen, Gruppe 41 für technische Probleme und Gruppe 42 für allgemeine Fragen zuständig. Dabei ist jeder Gruppe 40, 41, 42 von Call-Center-Agenten 5 eine Warteschlange 6a, 6b, 6c zum Halten von an zu der jeweiligen Gruppe 40, 41, 42 gehörenden Call-Center-Agenten 5 weiterzuleitenden Anrufen zugewiesen.

Gemäß einer ersten Ausgestaltungsvariante, die Mittel 22 zum Halten einer Warteposition aufweist, wird in den jeweiligen Warteschleifen 6a, 6b, 6c für einen eingehenden ersten Anruf 4 jeweils eine Warteposition unter Berücksichtigung des erfassten Zeitpunktes des Eingangs des ersten Anrufs 4 ermittelt und der Anruf 4 bzw. ein entsprechender Platzhalter (in Fig. 5 nicht explizit dargestellt) in jede der Warteschlangen 6a, 6b, 6c eingeordnet. Vorteilhafterweise wird der erste Anruf 4 in diejenige Warteschlange 6a, 6b, 6c eingeordnet, welche einen Anruf 4 zu der Gruppe von Call-Center-Agenten 5 weiterleitet, die das Sprachdialogsystem 13 unter Berücksichtigung der von dem Anrufer 3 geäußerten Belange als geeignetste ermittelt hat. So ist vorgesehen, dass das Sprachdialogsystem 13 den Anrufer 3 direkt befragen kann, ob er Hilfe zu Verträgen, technische Hilfe oder Hilfe in allgemeinen Dingen benötigt. Antwortet der Anrufer 3 daraufhin mit "Hilfe zu technischen Problemen", so wird der Anruf automatisch in die Warteschlange 6b eingeordnet. Zusätzlich wird in die Warteschlangen 6a und 6c jeweils ein Platzhalter eingeordnet, deren Warteposition unter Berücksichtigung von aus der Warteschlange 6a, 6c weitergeleiteten Anrufen angepasst wird. Wird nun der in der Warteschlange 6b gehaltene Anruf des Anrufers 3 an einen Call-Center-Agenten 5 der Gruppe 41 weitergeleitet und stellt der Call-Center-Agent 5 fest, dass die Belange des Anrufers 3 in das Ressort der Call-Center-Agenten 5 der Gruppe 42 fallen, so kann der Call-Center-Agent 5 der Gruppe 41 unter Nutzung der Mittel 23 zum Weiterleiten eines Anrufs den Anruf 4 bzw. 7 in die entsprechende Warteschlange 6c weiterleiten. Vorteilhafterweise wird der Anruf des Anrufers 3 dabei nicht an das Ende der Warteschlange eingeordnet, sondern an die Stelle, an der sich der Platzhalter für den entsprechenden Anruf befindet. Wird ein Anruf durch den Anrufenden 3 oder durch einen Call-Center-Agenten 5 beendet, so werden noch in den Warteschlangen 6a, 6b, 6c für den Anruf reservierte Platzhalter von dem System 1 gelöscht.

Gemäß einer zweiten Ausgestaltungsvariante weist das System 1 keine Mittel 22 zum Halten einer Warteposition auf. Der Anruf 4 bzw. 7 wird in die von dem Sprachdialogsystem 13 ermittelte Warteschlange 6a, 6b, 6c eingeordnet. Der den Rufnummern des Anrufers 3 zugeordnete Zeitpunkt des Eingangs des ersten Anrufs 4 bleibt dabei gespeichert. Ist der Anruf 4 bzw. 7 an einen Call-Center-Agenten 5 weitergeleitet worden, beispielsweise an einen Call-Center-Agenten 5 der Gruppe 40, und leitet dieser Call-Center-Agent 5 den Anruf unter Nutzung der Mittel 23 an einen Call-Center-Agenten 5 der Gruppe 42 weiter, so wird die Warteposition in der Warteschlange 6c für den weitergeleiteten Anruf unter Nutzung des Zeitpunkts des Eingangs des ersten Anrufs 4 bestimmt. Hierdurch hat der Anrufer 3 vorteilhafterweise nicht den Nachteil, bei einer Falschzuweisung zu einer Gruppe von Call-Center-Agenten 5 wieder an das Ende einer entsprechenden Warteschlange eingeordnet zu werden.

Die in den Figuren dargestellten und im Zusammenhang mit diesen beschriebenen Ausführungsbeispielen der Erfindung dienen lediglich der Erläuterung der Erfindung und sind für diese nicht beschränkend.

### Bezuqszeichenliste:

- 1: System zum Verwalten von Anrufen bei einem Call-Center
- 2: Anrufe
- 3: Anrufer
- 4: erster Anruf
- 5: Call-Center-Agent
- 6: Warteschlange
- 6a: Warteschlange
- 6b: Warteschlange
- 6c: Warteschlange
- 7: zweiter Anruf
- 8: Beenden eines Anrufs
- 9: Platzhalter
- 10: Mittel zum Annehmen eines Anrufs
- 11: Mittel zum Erfassen einer Rufnummer
- 12: Mittel zum Erfassen des Zeitpunktes eines Anrufs
- 13: Sprachdialogsystem (IVR)
- 14: Datenbank
- 15: Mittel zum Zuordnen eines Zeitpunktes zu einer Rufnummer
- 16: Mittel zum Ermitteln einer Warteposition
- 17: Mittel zum Einordnen eines Anrufs in eine Warteschlange (6)
- 18: Mittel zum Halten von Anrufen in einer Warteschlange (6)
- 19: Mittel zum Erfassen der Wartezeit eines eingehenden Anrufs (4)
- 20: Mittel zum Beenden eines Anrufs (4)
- 21: Mittel zum Initiieren eins Anrufs (7)
- 22: Mittel zum Halten einer Warteposition
- 23: Mittel zum Weiterleiten eines Anrufs
- 30: Warteposition 1, welche zur Weiterleitung des Anrufs an den nächsten verfügbaren Call-Center-Agenten (5) berechtigt
- 40: Gruppe von Call-Center-Agenten (5)
- 41: Gruppe von Call-Center-Agenten (5)
- 42: Gruppe von Call-Center-Agenten (5)

## Patentansprüche

1. Verfahren zum Betrieb eines Systems (1) zum Verwalten von Anrufen (2) bei einem Call-Center,
wobei
durch das System (1)
ein von einem Anrufer (3) unter Nutzung einer dem Call-Center zugeordneten Rufnummer initiierter erster Anruf (4) automatisch angenommen wird,
der erste Anruf (4) bis zur Weiterleitung an einen Call-Center-Agenten (5) in einer Warteschlange (6) von auf eine Weiterleitung an einen Call-Center-Agenten (5) wartenden weiteren Anrufen (2) gehalten wird,
in Bezug auf den ersten Anruf (4) eine Warteposition in der Warteschlange (6) ermittelt wird,
der erste Anruf (4) entsprechend der ermittelten Warteposition in die Warteschlange (6) eingeordnet wird, und
die in der Warteschlange (6) gehaltenen Anrufe (2) bei Verfügbarkeit eines Call-Center-Agenten (5) der Reihe nach an einen Call-Center-Agenten (5) weitergeleitet werden, wobei bezüglich der in der Warteschlange (6) weiter gehaltenen Anrufe (2) jeweils eine Anpassung der Warteposition erfolgt,
**dadurch gekennzeichnet, dass**
durch das System (1)
mit dem ersten Anruf (4) eine Rufnummer des Anrufenden (3) erfasst wird, der erste Anruf (4) bei nicht erfolgter Weiterleitung innerhalb eines vorbestimmten Zeitintervalls beendet wird,
unter Nutzung der erfassten Rufnummer ein zweiter Anruf (7) zu dem Anrufer (3) **unmittelbar nach Beenden des von dem Anrufer (3) initiierten ersten Anrufs (4)** initiiert wird, und
bei Entgegennahme des zweiten Anrufs (7) der zweite Anruf (7) in die Warteschlange (6) eingeordnet wird, wobei die Warteposition innerhalb der Warteschlange (6) unter Berücksichtigung des ersten Anrufs (4) ermittelt wird.

2. Verfahren nach Anspruch 1 **dadurch gekennzeichnet, dass** mit dem durch das System (1) erfolgten Beenden (8) des ersten Anrufs (4) der zweite Anruf (7) durch das System (1) initiiert wird.

3. Verfahren nach Anspruch 1 oder Anspruch 2, **dadurch gekennzeichnet, dass** der für den ersten Anruf (4) für eine Kommunikationsverbindung zwischen dem Anrufer (3) und dem Call-Center genutzte Kanal nach dem durch das System (1) erfolgten Beenden (8) des ersten Anrufs (4) für den zweiten Anruf (7) reserviert und für eine Kommunikationsverbindung von dem Call-Center zu dem Anrufer (3) genutzt wird.

4. Verfahren nach einem der Ansprüche 1 bis 3, **dadurch gekennzeichnet, dass** der Zeitpunkt des Eingangs des ersten Anrufs (4) erfasst wird und die Warteposition in der Warteschlange (6) unter Berücksichtigung des erfassten Zeitpunktes ermittelt wird.

5. Verfahren nach Anspruch 4, **dadurch gekennzeichnet, dass** der Zeitpunkt des Eingangs des ersten Anrufs (4) der erfassten Rufnummer zugeordnet wird, die Warteposition des zweiten Anrufs (7) in der Warteschlange (6) durch den der Rufnummer zugeordneten Zeitpunkt bestimmt wird und der zweite Anruf entsprechend der bestimmten Warteposition in die Warteschlange (6) eingeordnet wird.

6. Verfahren nach einem der Ansprüche 1 bis 4, **dadurch gekennzeichnet, dass** die in Bezug auf den ersten Anruf (4) ermittelte Warteposition der erfassten Rufnummer zugeordnet wird und der zweite Anruf (7) entsprechend der der erfassten Rufnummer zugeordneten Warteposition in die Warteschlange eingeordnet wird.

7. Verfahren nach einem der Ansprüche 1 bis 6, **dadurch gekennzeichnet, dass** die Warteposition unter Berücksichtigung weiterer Kriterien bestimmt wird.

8. Verfahren nach Anspruch 7, **gekennzeichnet durch** die Häufigkeit von durch den Anrufer initiierten Anrufen, einen einer Rufnummer eines Anrufers zugeordneten vorgebbaren Status und/oder eine aus mehreren Anrufen eines Anrufers resultierenden Gesamtwartezeit in der Warteschlange (6) des Systems (1) als weitere Kriterien.

9. Verfahren nach einem der Ansprüche 6 bis 8, **dadurch gekennzeichnet, dass** eine einer erfassten Rufnummer zugeordnete Warteposition jeweils bei Weiterleitung von in der Warteschlange (6) gehaltenen Anrufen (2) entsprechend angepasst wird

10. Verfahren nach einem der Ansprüche 1 bis 9, **dadurch gekennzeichnet, dass** mit der Initiierung des ersten Anrufs (4) die dem Endgerät des Anrufenden (3) zugeordnete Rufnummer über eine von dem Endgerät zu dem Call-Center aufgebaute Kommunikationsverbindung an das System (1) übermittelt wird.

11. Verfahren nach einem der Ansprüche 1 bis 10, **dadurch gekennzeichnet, dass** der angenommene erste Anruf (4) mit einem Sprachdialogsystem (13) verbunden wird.

12. Verfahren nach Anspruch 11, **dadurch gekennzeichnet, dass** zur Erfassung einer Rufnummer des Anrufenden (3) der Anrufer (3) in einem Dialog mit dem Sprachdialogsystem (13) zur Eingabe einer Rufnummer aufgefordert wird.

13. Verfahren nach einem der Ansprüche 1 bis 12, **dadurch gekennzeichnet, dass** bei nicht erfolgter Entgegennahme des zweiten Anrufs (7) wenigstens ein weiterer zweiter Anruf (7) durch das System (1) initiiert wird.

14. System (1) zum Verwalten von Anrufen (2) bei einem Call-Center, **gekennzeichnet durch** Mittel zum Ausführen eines Verfahrens nach einem der Ansprüche 1 bis 13.

## Claims

1. A method for operating a system (1) for the management of calls (2) in a call centre,
wherein the system (1) will
automatically answer a first call (4) initiated by a caller (3) using a call number allocated to the call centre,
keep the first call (4) in a waiting line (6) of further calls (2) which are waiting to be forwarded to a call centre agent (5) until the first call (4) is forwarded to a call centre agent (5),
determine a waiting position in the waiting line (6) with respect to the first call (4),
insert the first call (4) into the waiting line (6) corresponding to the determined waiting position, and
if a call centre agent (5) is available, successively forward the calls (2) kept in the waiting line (6) to a call centre agent (5), wherein the waiting position of the other calls (2) kept in the waiting line (6) will be respectively adapted, **characterized in that**
the system (1) will
record a call number of the caller (3) upon the first call (4),
end the first call (4), if it is not forwarded within a predetermined time interval, initiate a second call (7) to the caller (3) using the recorded call number immediately after the first call (4) initiated by the caller (3) has been ended, and
insert the second call (7) into the waiting line (6) upon answering the second call (7), wherein the waiting position within the waiting line (6) will be determined considering the first call (4).

2. A method according to claim 1, **characterized in that** the second call (7) will be initiated by the system (1) if the first call (4) is ended (8) by the system (1).

3. A method according to claim 1 or claim 2, **characterized in that** the channel used for the first call (4) for a communication connection between the caller (3) and the call centre will be reserved for the second call (7) after the first call (4) has been ended (8) by the system (1) and will be used for a communication connection from the call centre to the caller (3).

4. A method according to one of the claims 1 to 3, **characterized in that** the time of receipt of the first call (4) will be recorded and the waiting position in the waiting line (6) will be determined in consideration of the recorded time.

5. A method according to claim 4, **characterized in that** the time of receipt of the first call (4) will be allocated to the recorded call number, the waiting position of the second call (7) in the waiting line (6) will be determined by the time allocated to the call number and the second call will be inserted into the waiting line (6) according to the determined waiting position.

6. A method according to one of the claims 1 to 4, **characterized in that** the waiting position determined with respect to the first call (4) will be allocated to the recorded call number and the second call (7) will be inserted into the waiting line according to the waiting position allocated to the recorded call number.

7. A method according to one of the claims 1 to 6, **characterized in that** the waiting position will be determined in consideration of other criteria.

8. A method according to claim 7, **characterized by** the frequency of calls initiated by the caller, a pre-determinable status allocated to a call number of a caller and/or a total waiting time in the waiting line (6) of the system (1), which total waiting time results from several calls of a caller, as further criteria.

9. A method according to one of the claims 6 to 8, **characterized in that** a waiting position allocated to a recorded call number will be adapted accordingly, if calls (2) which are held in the waiting line (6) are respectively forwarded.

10. A method according to one of the claims 1 to 9, **characterized in that** upon initiation of the first call (4) the call number allocated to the terminal of the caller (3) will be transmitted to the system (1) via a communication connection established between the terminal and the call centre.

11. A method according to one of the claims 1 to 10 **characterized in that** the answered first call (4) will be connected to a voice response system (13).

12. A method according to claim 11, **characterized in that** the caller (3) will be asked in a dialogue with the voice response system (13) to enter a call number for recording a call number of the caller (3).

13. A method according to one of the claims 1 to 12 **characterized in that** if the second call (7) is not answered, at least one other second call (7) will be initiated by the system (1).

14. A system (1) for the management of calls (2) in a call centre, **characterized by** means for carrying out a method according to one of the claims 1 to 13.

## Revendications

1. Procédé de fonctionnement d'un système (1) de gestion d'appels (2) dans un centre d'appels,
dans lequel
le système (1)
répondra automatiquement à un premier appel (4) initié par un appelant (3) en utilisant un numéro d'appel attribué au centre d'appels,
gardera le premier appel (4) dans une file d'attente (6) d'autres appels (2), qui attendent pour être transférés à un agent de centre d'appels (5), jusqu'à ce que le premier appel soit transféré à un agent de centre d'appels (5), déterminera une position d'attente dans la file d'attente (6) par rapport au premier appel (4),
insérera le premier appel (4) dans la file d'attente (6) selon la position d'attente déterminée, et
si un agent de centre d'appels (5) est disponible, transférera successivement les appels (2) gardés dans la file d'attente (6) à un agent de centre d'appels (5), la position d'attente des autres appels (2) gardés dans la file d'attente (6) étant adaptée respectivement,
**caractérisé en ce que**
le système (1)
saisira un numéro d'appel de l'appelant (3) avec le premier appel (4), terminera le premier appel (4), s'il n'est pas transféré au cours d'un intervalle de temps prédéterminé,
initiera un deuxième appel (7) à l'appelant (3) en utilisant le numéro d'appel saisi immédiatement après que le premier appel (4) initié par l'appelant (3) a été terminé, et
insérera le deuxième appel (7) dans la file d'attente (6) en répondant au deuxième appel (7), la position d'attente dans la file d'attente (6) étant déterminée en tenant compte du premier appel (4).

2. Procédé selon la revendication 1, **caractérisé en ce que** le deuxième appel (7) sera initié par le système (1), si le premier appel (4) est terminé (8) par le système (1).

3. Procédé selon la revendication 1 ou la revendication 2, **caractérisé en ce que** le canal utilisé pour le premier appel (4) pour une liaison de communication entre l'appelant (3) et le centre d'appels sera réservé pour le deuxième appel (7) après que le premier appel (4) a été terminé (8) par le système (1) et sera utilisé pour une liaison de communication à partir du centre d'appels à l'appelant (3).

4. Procédé selon l'une des revendications 1 à 3, **caractérisé en ce que** le moment où le premier appel (4) arrive sera enregistré et la position d'attente dans la file d'attente (6) sera déterminée en tenant compte du moment enregistré.

5. Procédé selon la revendication 4, **caractérisé en ce que** le moment d'arrivée du premier appel (4) sera attribué au numéro d'appel saisi, la position d'attente du deuxième appel (7) dans la file d'attente (6) sera déterminée par le moment attribué au numéro d'appel et le deuxième appel sera inséré dans la file d'attente (6) conformément à la position d'attente déterminée.

6. Procédé selon l'une des revendications 1 à 4, **caractérisé en ce que** la position d'attente déterminée par rapport au premier appel (4) sera attribuée au numéro d'appel saisi et le deuxième appel (7) sera inséré dans la file d'attente conformément à la position d'attente attribuée au numéro d'appel saisi.

7. Procédé selon l'une des revendications 1 à 6, **caractérisé en ce que** la position d'attente sera déterminée en tenant compte d'autres critères.

8. Procédé selon la revendication 7, **caractérisé par** la fréquence d'appels initiés par l'appelant, un statut pré-déterminable attribué à un numéro d'appel d'un appelant et/ou un temps total d'attente dans la file d'attente (6) du système (1), le temps total d'attente résultant de plusieurs appels d'un appelant, comme d'autres critères.

9. Procédé selon l'une des revendications 6 à 8, **caractérisé en ce qu'**une position d'attente attribuée à un numéro d'appel saisi sera adaptée de manière correspondante, si des appels (2) gardés dans la file d'attente (6) sont chacun transférés.

10. Procédé selon l'une des revendications 1 à 9, **caractérisé en ce que** pendant l'initiation du premier appel (4) le numéro d'appel attribué au terminal de l'appelant (3) sera transmis au système (1) via une liaison de communication établie entre le terminal et le centre d'appels.

11. Procédé selon l'une des revendications 1 à 10, **caractérisé en ce que** le premier appel accepté (4) sera connecté à un serveur vocal interactif (13).

12. Procédé selon la revendication 11, **caractérisé en ce que** l'appelant (3) est demandé d'entrer un numéro d'appel dans un dialogue avec le serveur vocal interactif (13) pour saisir un numéro d'appel de l'appelant (3).

13. Procédé selon l'une des revendications 1 à 12, **caractérisé en ce que** si le deuxième appel (7) n'est pas répondu, au moins un autre deuxième appel (7) sera initié par le système (1).

14. Système (1) destiné à gérer des appels (2) dans un centre d'appels, **caractérisé par** des moyens pour exécuter un procédé selon l'une des revendications 1 à 13.
